# FASCICULE DE BREVET EUROPEEN

(11) **EP 2 561 425 B1**
(45) Date de publication et mention de la délivrance du brevet: **21.08.2019**
(21) Numéro de dépôt: 11721566.5
(22) Date de dépôt: 20.04.2011
(51) Int. Cl.: G06F 1/16, G06F 3/041, G06F 3/0354

(54) **INTERFACE HOMME-MACHINE A BOITIER RENFORCE**
MENSCH-MASCHINE-SCHNITTSTELLE MIT VERSTÄRKTEM GEHÄUSE
MAN/MACHINE INTERFACE HAVING A REINFORCED HOUSING

(30) Priorité: 21.04.2010 FR 1053043
(43) Date de publication de la demande: 27.02.2013
(73) Titulaire: Valeo Systèmes Thermiques, 78321 Le Mesnil-Saint-Denis Cedex (FR)
(72) Inventeur: AUTRAN, Frédéric, F-75018 Paris (FR); BERAUD, Henry, F-94300 Vincennes (FR)
(74) Mandataire: Pothmann, Karsten
(86) Numéro de dépôt international: PCT/FR2011/000240
(87) Numéro de publication internationale: WO 2011/131865

(56) Documents cités:
- US-A1- 2007 030 254
- US-A1- 2010 061 040
- US-A1- 2010 066 682
- US-B1- 6 965 375
- US-B1- 7 348 964

## Description

Le secteur technique de la présente invention est celui des dispositifs de détection tactile embarqués dans une interface homme-machine. Ces dispositifs de détection tactile sont utilisés aujourd'hui dans de nombreux secteurs comme la domotique, les matériels informatiques et d'une manière générale pour tous systèmes de commande d'un équipement. L'invention vise plus particulièrement l'application de tels dispositifs au véhicule automobile. Dans ce domaine, ces dispositifs sont communément appelés interfaces homme-machine comme étant un dispositif d'affichage et de commande des équipements de véhicule. On trouve ce type d'interface homme-machine dans l'habitacle du véhicule pour commander le système de navigation, le système audio ou multimédia ou encore le système de climatisation.

Dans un dispositif selon l'art antérieur, un écran est installé dans un boîtier, ce dernier présentant une ouverture. L'écran présente une face supérieure sur laquelle est posé un capteur au droit de l'ouverture. L'ouverture est bordée par un pourtour du boîtier, ledit pourtour recouvrant le capteur de manière importante en formant un épaulement à l'intersection du capteur et du pourtour.

Les documents US 6,965,375 B1, US 2010/0066682 A1, ou encore US 7, 348, 964 B1, illustrent des dispositifs connus de l'art antérieur.

Une telle disposition présente de nombreux inconvénients. Un des principaux inconvénients est que le pourtour forme une surépaisseur par rapport à la partie supérieure du capteur, ce qui nuit à l'esthétique générale du dispositif. En effet, pour des raisons esthétiques, il est de plus en plus souhaité que la surface globale de l'interface homme-machine et visible par l'utilisateur soit la plus lisse et uniforme possible et on comprend bien qu'une telle surépaisseur entre le capteur et le boîtier va à l'encontre de ce caractère lisse et uniforme. Ceci est la conséquence de l'emploi de matériaux aux propriétés de dilatation différentes. En effet, le capteur est principalement constitué de verre alors que le boîtier est généralement en plastique. Les coefficients de dilation étant différents, il n'est pas possible de maintenir un jeu constant en toutes circonstances, gage d'un haut niveau de finition à l'intérieur des véhicules. C'est pourquoi les dispositifs de l'art antérieur proposent un chevauchement entre le capteur et le pourtour tout en laissant un jeu de fonctionnement, ce qui créer les inconvénients évoqués plus haut.

Il existe donc un besoin pour former une interface homme-machine présentant une façade lisse et uniforme, de conception économique mais qui ne présente pas des jeux ou fissures anormaux à la périphérie du capteur tactile.

Le but de la présente invention est donc de résoudre les inconvénients décrits ci-dessus principalement en renforçant le châssis ou boîtier de sorte à éviter des écarts de dilatation thermiques qui seraient susceptibles de causer des jeux, des jours ou des fissures inesthétiques du point de vue de l'utilisateur de l'interface homme-machine.

L'invention est définie dans la revendication indépendante. Les aspects supplémentaires de l'invention sont définis dans les revendications dépendantes. Les expressions "mode de réalisation" ou "variante" ne se rapportent qu'à des combinaisons de caractéristiques telles que définies dans les revendications. Dans la présente spécification, quand les expressions "mode de réalisation" ou "variante" se réfèrent à des combinaisons de caractéristiques qui ne sont pas revendiquées, lesdites expressions doivent alors être interprétées comme se rapportant plutôt à des exemples de la présente invention.

Un tout premier avantage selon l'invention réside dans la possibilité de mettre en oeuvre une interface homme-machine qui présente une façade lisse et agréable au toucher en utilisant des moyens techniques économiques.

Un autre avantage réside dans la possibilité de garantir une parfaite tenue mécanique face aux contraintes thermiques et mécaniques de l'interface homme-machine à l'aide de moyen simple à mettre en oeuvre.

D'autres caractéristiques, détails et avantages de l'invention ressortiront plus clairement à la lecture de la description donnée ci-après à titre indicatif en relation avec des dessins dans lesquels :
- la figure 1 est une vue de face de l'interface homme-machine selon l'invention,
- la figure 2 est une section selon X-X de la figure 1 illustrant une première variante de réalisation de l'invention,
- la figure 3 est une section selon X-X illustrant un détail d'une deuxième variante de l'invention,
- la figure 4 est une section selon X-X de la figure 1 illustrant une troisième variante de réalisation de l'invention,
- la figure 5 est une section selon X-X de la figure 1 illustrant une quatrième variante de réalisation de l'invention,
- la figure 6 est une section selon X-X de la figure 1 illustrant une cinquième variante de réalisation de l'invention,
- la figure 7 est une section selon X-X de la figure 1 illustrant une sixième variante de réalisation de l'invention,
- la figure 8 est une section selon X-X de la figure 1 illustrant une alternative de fixation du moyen de détection tactile,
- la figure 9 illustre une variante de réalisation de l'invention.

Il faut noter que les figures exposent l'invention de manière détaillée, lesdites figures peuvent bien entendu servir à mieux définir l'invention le cas échéant.

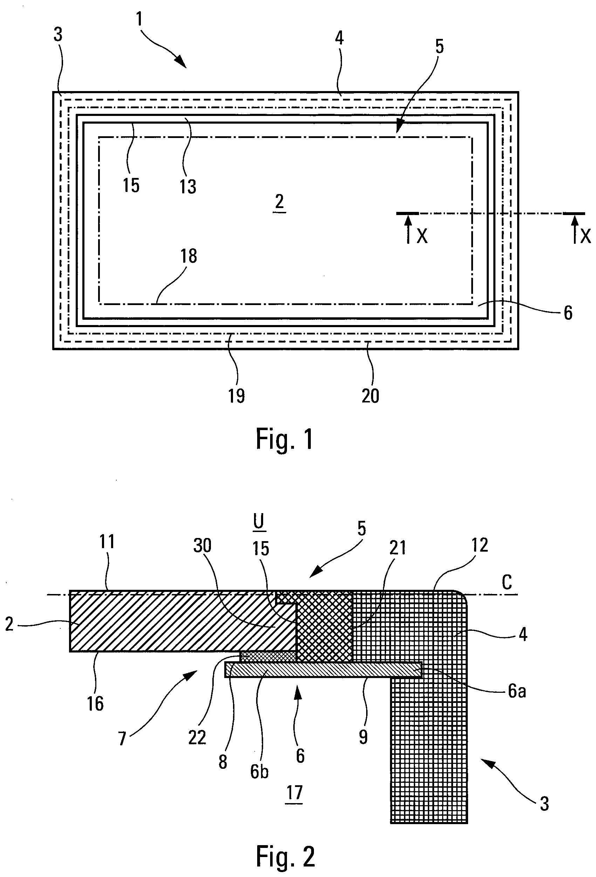

La figure 1 représente une vue schématique de face d'une interface homme-machine 1 pour véhicule automobile. Une telle interface 1 est fixée à proximité d'un utilisateur, par exemple au niveau d'une console centrale du véhicule ou au niveau de la planche de bord, pour commander des fonctions ou des équipements du véhicule. Ces derniers sont par exemple l'installation de ventilation, chauffage et/ou climatisation, un système audio, un système de téléphonie, un système multimédia ou encore un système de navigation.

L'interface homme-machine 1 comprend un boîtier 3 de forme rectangulaire à l'intérieur duquel est installé un moyen de détection tactile 2. Une ouverture 5 est pratiquée dans le boîtier de sorte à rendre accessible par l'utilisateur le moyen de détection tactile 2. Cette ouverture 5 est délimitée par un bord 4 du boîtier 3, ce bord 4 s'étendant de manière périphérique tout autour de l'ouverture 5. Une garniture de nivellement 13 est interposée entre le bord 4 du boîtier et une tranche périphérique 15 du moyen de détection tactile 2.

Le boîtier 3 comprend un évidement interne à l'intérieur duquel sont installés des éléments complémentaires à l'interface. Dans un exemple préféré, un dispositif d'affichage (non représenté) est installé dans l'évidement pratiqué dans le boîtier 3. La technologie employée par le dispositif d'affichage est par exemple un écran rétro-éclairé, un écran LCD, un écran plasma et d'une manière générale tout écran mono-fonction comme par exemple un tableau de commande de climatisation ou multifonctions, c'est-à-dire affichant une multiplicité d'informations telle que la navigation, le système audio, la gestion thermique de l'habitacle du véhicule par exemple.

Le moyen de détection tactile 2 est constitué par un capteur résistif ou un capteur capacitif, l'un ou l'autre étant transparent. Dans le cas d'un capteur résistif, ce dernier est constitué d'une plaque principale et d'une plaque secondaire. Ces deux plaques sont en verre, la plaque secondaire étant plus fine que la plaque principale. La plaque secondaire présente la fonction de se déformer sous une force d'appui exercée par le doigt de l'utilisateur alors que la plaque principale est moins déformable, son épaisseur est telle qu'elle ne fléchit pas sous l'effet d'une pression exercée par le doigt d'un utilisateur. Le capteur est ainsi en mesure de détecter la position du doigt de l'utilisateur grâce à un réseau de conducteurs placé entre la plaque principale et la plaque secondaire, selon une disposition par exemple horizontale et verticale. Le moyen de détection tactile 2 est relié électriquement à une carte électronique au moyen d'un flexible multiconducteur, la carte électronique assurant l'interprétation de la détection effectuée par le moyen de détection tactile 2.

Selon l'invention, le boîtier 3 comprend un moyen de renfort 6 dont les variantes de réalisation seront mieux détaillées ci-après. Le trait pointillé intérieur illustre une tranche intérieure référencée 18 du moyen de renfort, le trait en pointillé suivant en allant vers l'extérieur de l'interface illustre une paroi interne 19 du boîtier 3 et enfin le dernier trait pointillé montre une première partie du moyen de renfort 6, et plus particulièrement une tranche extérieure référencée 20 du moyen de renfort 6.

La figure 2 montre une section partielle de l'interface homme-machine selon l'invention selon une coupe X-X présentée sur la figure 1. Le moyen de détection tactile 2 présente une façade supérieure 11 orientée vers l'utilisateur U et une façade inférieure 16 tournée vers l'évidement interne 17 formé dans le boîtier 3. Ce dernier présente une section en forme de « L » inversée et le moyen de renfort 6 est intégré dans la matière plastique qui forme le boîtier 3. De manière avantageuse, le moyen de renfort 6 est surmoulé par le boîtier 3 selon un procédé où le moyen de renfort est installé dans un moule et dans lequel est injecté le matériau plastique du boîtier à l'état liquide pour venir en prise sur une première partie 6a du moyen de renfort 6. Cette première partie 6a est une bordure extérieure qui peut comporter des trous (non représentés) permettant au matériau plastique de traverser le moyen de renfort et ainsi d'augmenter la liaison mécanique entre le moyen de renfort 6 et le boîtier 3.

Le matériau du moyen de renfort 6 est choisit parmi les matériaux ayant un coefficient de dilatation identique à plus ou moins 33% du matériau constituant le moyen de détection tactile 2. Dans le cas où ce dernier est fabriqué principalement par du verre, le coefficient de dilatation du verre est égal à 9x10⁻⁶ pour 1/K ce qui autorise un choix de matériau pour le moyen de renfort dont le coefficient de dilatation est au maximum de 12x10⁻⁶ pour 1/K. C'est le cas de l'acier et c'est pourquoi il est aisé de renforcer le boîtier 3 en noyant en son sein une plaque métallique, en acier par exemple.

Le bord 4 du boîtier délimite l'ouverture 5 où est placé le moyen de détection tactile 2, autrement appelé capteur tactile ou dalle tactile. Une tranche 21 borde l'ouverture 5 et cette tranche se termine par un contact sur le moyen de renfort 6.

Dans l'exemple de la figure 2, le moyen de renfort prend la forme d'une plaque métallique plane d'une épaisseur comprise entre 0,20 et 0,50 mm. Outre la première partie 6a du moyen de renfort noyée ou surmoulée dans le boîtier 3, cette plaque métallique comprend une deuxième partie 6b qui débouche dans le volume interne délimité par le boîtier ou autrement dit dans l'évidement 17. Cette deuxième partie 6b s'étend au niveau de l'ouverture 5 et sert de support au moyen de détection tactile 2.

Dans l'exemple de la figure 2, la plaque métallique, formant moyen de renfort 6, présente un trou 7 délimité ou bordé par la deuxième partie 6b du moyen de renfort. Dans un tel cas, le moyen de renfort est unique pour l'interface homme-machine selon l'invention et prend une forme générale rectangulaire avec en son centre le trou 7. Ce dernier permet aux rayons lumineux du dispositif d'éclairage de traverser le moyen de détection tactile 2 de sorte à rendre les informations affichées par le dispositif d'affichage visibles par l'utilisateur.

Le moyen de détection tactile 2 comprend une bordure 30 terminée par la tranche périphérique 15. Cette bordure 30 est zone de fixation ou solidarisation du moyen de détection tactile 2 sur le moyen de renfort 6. Plus particulièrement, la fixation intervient entre la façade inférieure 16 du moyen de détection tactile 2, au droit de la bordure 30, et une face supérieure 8 orientée vers un utilisateur du moyen de renfort 6. La fixation est opérée au moyen de point de colle ou d'une bande de colle 22 placée entre la façade inférieure 16 du moyen de détection tactile 2 et la face supérieure 8 du moyen de renfort 6. A l'opposé de cette face supérieure 8, le moyen de renfort 6 présente une face inférieure 9 qui est quant à elle orientée vers l'évidement 17 du boîtier 3.

On notera tout particulièrement que la façade supérieure 11 du moyen de détection tactile 2, c'est-à-dire celle qui fait face à l'utilisateur, est alignée dans un même plan C qu'un bandeau de façade 12 que présente le bord 4 du boîtier 3 et qui fait face lui aussi à l'utilisateur. On s'assure ainsi que la face visible par l'utilisateur de l'interface homme-machine est parfaitement lisse au toucher.

Dans cette variante de réalisation, la première partie 6a et la deuxième partie 6b du moyen de renfort 6 s'étend dans un même plan parallèle au plan C.

L'interface homme-machine selon l'invention comprend la garniture de nivellement 13, périphérique à la dalle tactile ou moyen de détection tactile 2, pour combler l'espace délimité par la tranche 21 du bord 4, la face supérieure 8 du moyen de renfort 6 et la tranche périphérique 15 du moyen de détection tactile 2. Ceci permet de garantir une continuité lisse de la surface de commande du moyen de détection tactile 2 avec le bord 4 du boîtier 3.

Ainsi, la garniture de nivellement 13, installée périphériquement et dans l'épaisseur du moyen de détection tactile 2, met à niveau le moyen de détection tactile 2 avec le bord du boîtier 3 de sorte que l'utilisateur ne perçoive qu'une surface lisse et uniforme au toucher, sans aspérités ou renflements, le glissement du doigt sur la frontière entre le moyen de détection tactile 2 et le bord 4 du boîtier 3 n'étant pas perceptible et pouvant en outre être rendu invisible par le choix du coloris utilisé, donnant l'impression d'une surface continue. Pour la garniture de nivellement 13, on choisit un matériau pouvant être coulé ou injecté à basse pression et à faible température, comme un élastomère, tel qu'un matériau EPDM (Éthylène Propylène Diène Monomère), un TPE (élastomère thermoplastique tel qu'un matériau SEBS (Styrène-éthylène-butylène-styrène), SBS (styrène-butadiène-styrène) ou TPU (Polyuréthane thermoplastique)) ou un élastomère silicone. Une fois polymérisés, ces matériaux se rigidifient, offrant un aspect lisse au toucher.

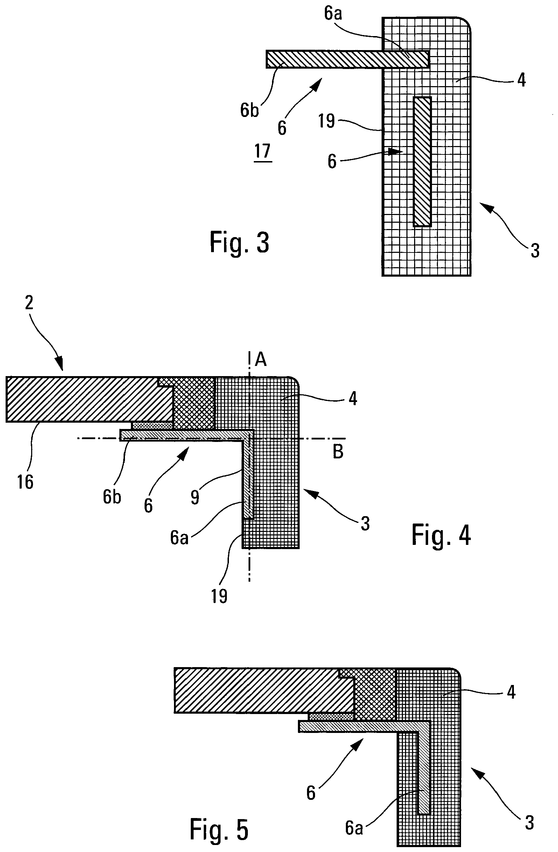

La figure 3 montre une variante de l'invention qui emploi une multiplicité de moyens de renfort 6. Par multiplicité, on entend au moins deux plaques métalliques orientées orthogonalement l'une par rapport à l'autre mais il peut s'agir aussi d'une multiplicité de plaques métalliques distinctes et placées dans chaque côté du rectangle formé par le boîtier 3 (selon la figure 1).

Sur la figure 3, un premier moyen de renfort 6 est intégralement noyé dans le matériau plastique constituant le boîtier 3 et un second moyen de renfort 6 est installé dans la partie supérieure du bord 4, une première partie 6a du moyen de renfort 6 étant surmoulée ou noyée dans le matériau constitutif du boîtier 3 alors qu'une deuxième partie 6b dépasse de la paroi interne 19 du boîtier en direction de l'évidement 17.

La figure 4 montre une variante de réalisation du moyen de renfort 6. Dans ce cas d'espèce, la plaque métallique formant moyen de renfort 6 est conformée de telle sorte que sa première partie 6a est orientée angulairement par rapport à sa deuxième partie 6b tout en ne formant qu'une unique pièce. Dans cet exemple de réalisation, la première partie 6a et la deuxième partie 6b s'étendent respectivement dans un premier plan A et un deuxième plan B qui forment un angle de 90°. Sans sortir du cadre de l'invention, lesdits plans A et B peuvent prendre un angle compris entre 75° et 105°, l'important étant que la deuxième partie 6b du moyen de renfort soit parallèle à la façade inférieure 16 du moyen de détection tactile 2 et que la première partie 6a du moyen de renfort 6 soit intégralement contenue ou noyée dans le bord 4 du boîtier 3.

La figure 4 illustre une autre différence avec le mode de réalisation de la figure 2. En effet, la première partie 6a est noyée dans le bord 4 au niveau de la paroi interne 19 de telle sorte que la face inférieure 9 du moyen de renfort 6 affleure la paroi interne 19 une fois que le moyen de renfort est solidarisé au bord 4 du boîtier 3. Dans une telle situation, la face inférieure 9 au niveau de la première partie 6a est apparente à l'intérieur du boîtier 3.

La figure 5 illustre une variante proche de celle illustrée à la figure 4. La différence réside dans le fait que la première partie 6a du moyen de renfort 6 est intégralement noyée dans le matériau plastique constituant le bord 4 du boîtier 3. On notera tout particulièrement que la première partie 6a est noyée sensiblement au centre de l'épaisseur du bord 4 formant le boîtier 3. Le reste de la réalisation de la figure 5 est identique au mode de réalisation de la figure 4.

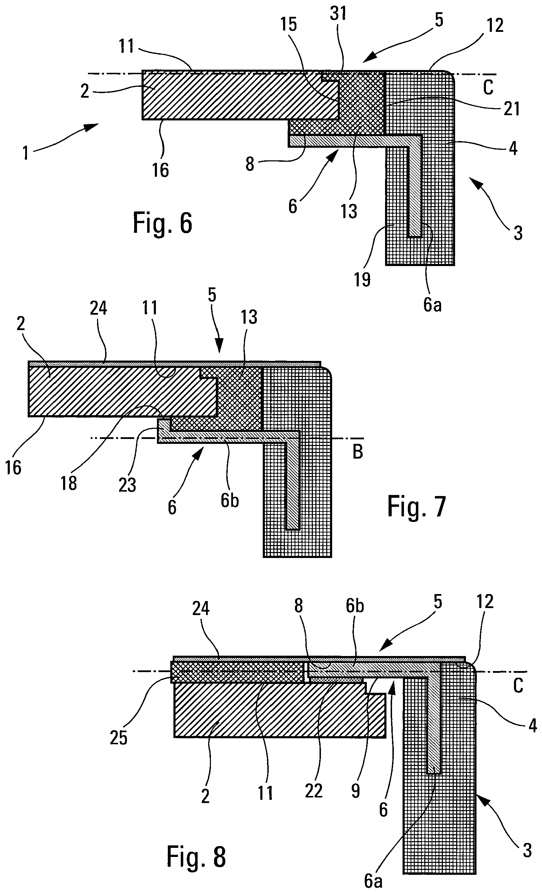

La figure 6 vise une variante où la garniture de nivellement assure en plus la fonction de solidarisation du moyen de détection tactile 2 sur le moyen de renfort 6. La première partie 6a du moyen de renfort 6 est intégralement noyée dans le matériau plastique constituant le bord 4 du boîtier 3 alors que la deuxième partie 6b dépasse ou débouche de la paroi interne 19 du boîtier en direction de l'évidement 17, sensiblement au niveau de l'ouverture 5. Dans cette variante de réalisation, la garniture de nivellement 13 comporte des propriétés adhésives de sorte à assurer le collage entre la façade inférieure 16 du moyen de détection tactile 2 et la face supérieure 8 de la deuxième partie 6b du moyen de renfort 6. Pour ce faire, la garniture de nivellement s'intercale entre ces deux parois et assure le collage de ces dernières. La garniture de nivellement 13 comble donc l'espace délimité par la tranche 21 du bord 4, la face supérieure 8 du moyen de renfort 6, la tranche périphérique 15 du moyen de détection tactile 2 et la façade inférieure 16 de ce même moyen, où elle assure sa fonction de collage. Bien entendu, la façade supérieure 11, une face supérieure 31 de la garniture de nivellement et le bandeau de façade 12 du bord 4 sont contenus dans un même plan C de sorte à garantir le caractère lisse et uniforme de l'interface homme machine 1.

La figure 7 illustre une variante complémentaire de celle illustrée à la figure 6. Comme la garniture de nivellement 13 est injectée à l'état liquide, l'invention propose de replier la deuxième partie 6b du moyen de renfort 6 de sorte à former un berceau contenant la garniture de nivellement avant sa solidification. La deuxième partie 6b présente donc à son extrémité libre un pli 23 sensiblement perpendiculaire par rapport au deuxième plan B dans lequel s'étend la deuxième partie 6b et orienté en direction de la façade supérieure 11 du moyen de détection tactile 2. La tranche intérieure 18 du moyen de renfort 6 est ainsi en contact sur la façade inférieure 16 du moyen de détection tactile 2.

Pour garantir un aspect lisse et uniforme de l'interface 1, un film 24 est disposé sur la façade supérieure 11 du moyen de détection tactile 2 de sorte à couvrir l'ouverture 5, la garniture de nivellement 13 et le bord 4 du boîtier 3. Ce film s'étend sur toute la surface de l'interface homme-machine, on comprend donc que les dimensions du film 24 et les dimensions de l'interface 1 sont similaires, voire identiques. Ce film forme ainsi une surface totalement lisse et uniforme au toucher pour l'utilisateur.

Le film 24 est un film transparent qui peut présenter une seule propriété ou une combinaison de propriétés. Une première propriété est liée au caractère décoratif que ce film revêt. En effet, il alors aisé de définir une forme particulière visible par l'utilisateur. Le film 24 peut aussi comporter des propriétés anti-rayure de sorte à éviter l'apparition de toutes griffures sur la surface de l'interface homme-machine. Le film peut présenter aussi une propriété anti-reflet et diffusante, cette dernière donnant un aspect mat à l'interface homme-machine et évitant les effets miroirs gênants pour l'utilisateur. La propriété anti-reflet empêche que la lumière incidente ne ressorte de la surface. Il s'agit d'un traitement en couches minces. Le film peut aussi comporter des propriétés de diffusion, obtenu par un léger graissage qui éclate la lumière incidente en la renvoyant dans toutes les directions. Enfin, le film 24 peut présenter des propriétés polarisantes, c'est-à-dire susceptibles de barrer la lumière réfléchie par les plaques de verre du moyen de détection tactile dans une direction donnée.

Sur la figure 8, le bord 4 du boîtier 3 présente le bandeau de façade 12 constitué par la paroi du bord 4 orientée vers l'utilisateur. La première partie 6a est noyée ou surmoulée dans le bord 4 du boîtier 3 et la deuxième partie 6b du moyen de renfort 6 déborde ou dépasse du bord 4 au niveau de l'ouverture 5.

On notera tout d'abord que la face supérieure 8 du moyen de renfort 3, au niveau de sa deuxième partie 6b, est compris dans un même plan C que le bandeau de façade 12. On comprend donc que la face supérieure 8 affleure le bandeau de façade 12.

Le mode fixation du moyen de détection tactile est différent de variantes décrites précédemment. En effet, le moyen de détection tactile 2 est fixé sur la face inférieure 9 du moyen de renfort 6. Il s'agit de tous moyens utilisables pour solidariser deux pièces. Avantageusement, un cordon ou des points de colle 22 font le lien mécanique entre la façade supérieure 11 du moyen de détection tactile et la face inférieure 9 de la plaque métallique formant moyen de renfort du boîtier mais aussi support du moyen de détection tactile. Alternativement, les points de colles peuvent être remplacés ou complétés par une bande adhésive. Cette disposition permet d'obtenir un moyen de détection tactile assemblé dans l'interface homme-machine en mode « suspendu ».

Un élément de comblement 25, dont l'objectif est de définir conjointement avec la face supérieure 8 du moyen de renfort 6 une surface plane et lisse, est ajouté au niveau de l'ouverture 5 en appui contre la façade supérieure 11 du moyen de détection tactile. L'élément de comblement 25 est un film transparent et souple fabriqué à partir d'une bande de polycarbonate ou polyéthylène téréphtalate (PET) et son épaisseur est égale à la somme de l'épaisseur du moyen de renfort 6, particulièrement au niveau de sa deuxième partie 6b avec l'épaisseur de la colle 22. Un film 24 est déposé sur l'élément de comblement 25, sur la face supérieure 8 du moyen de renfort 6, au niveau de sa deuxième partie 6b, et enfin sur le bandeau de façade 12.

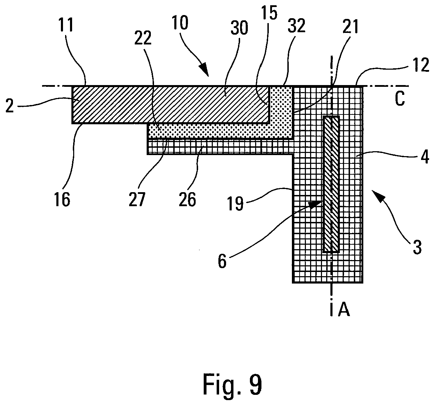

Dans les variantes de réalisation précédentes, le moyen de renfort assure une fonction primaire, qui est de renforcer la tenue mécanique du bord du boîtier, et une fonction secondaire qui est de supporter le moyen de détection tactile. Dans la variante de la figure 9, ces fonctions sont découplées. En effet, le moyen de renfort ne supporte pas le moyen de détection tactile, cette fonction étant dévolue au boîtier 3. Pour ce faire, le boîtier 3 comporte un épaulement 26 qui reçoit le moyen de détection tactile 2 et plus particulièrement sa bordure 30. Cet épaulement 23 prend naissance sur la paroi interne 19 en direction de l'évidement interne 17. La direction d'extension de l'épaulement 26 est donc sensiblement perpendiculaire à la direction d'extension A du moyen de renfort 6 noyée intégralement dans le bord 4 du boîtier 3. L'épaulement 26 et la tranche 21 de l'ouverture 5 délimitent une zone de réception 10 de la bordure 20 du moyen de détection tactile 2. Une bande de colle 22 est interposé entre la façade inférieure 16 du moyen de détection tactile 2 et une paroi 27 de l'épaulement 26 orientée vers la zone de réception 10, ainsi qu'entre la tranche 21 et la tranche périphérique 15 du moyen de détection tactile 2. Dans cette variante de réalisation, le boîtier reçoit et maintient le moyen de détection tactile tout en étant renforcé par une plaque métallique noyée à coeur dans le bord du boîtier. Comme pour les variantes des figures 1 à 7, la façade supérieure 11 du moyen de détection tactile 2, c'est-à-dire celle qui fait face à l'utilisateur, un bord supérieur 32 de la bande colle 22 et le bandeau de façade 12 du bord 4 sont contenus dans un même plan C de sorte à garantir le caractère lisse et uniforme de l'interface homme machine 1. On s'assure ainsi que la face visible par l'utilisateur de l'interface homme-machine est parfaitement lisse au toucher.

## Revendications

1. Interface homme-machine (1) comprenant un moyen de détection tactile (2) comprenant une façade supérieure (11) orientée vers un utilisateur et un boîtier (3), ledit boîtier comprenant un bord (4) délimitant une ouverture (5), ledit moyen de détection tactile (2) étant logé dans une zone de réception (10) du boîtier (3) au moins au droit de ladite ouverture (5), **caractérisé en ce que** le boîtier comprend au moins un moyen de renfort (6) formé par une plaque métallique comprenant une première partie (6a) noyée dans ledit bord (4) du boîtier (3) et une deuxième partie (6b) débouchant du bord (4) au niveau de ladite ouverture (5), la deuxième partie de la plaque étant parallèle à la face inférieure (16) du moyen de détection tactile, le moyen de renfort comprenant un trou (7) délimité par ladite deuxième partie (6b), ledit moyen de détection tactile (2) étant solidarisé sur ladite deuxième partie (6b) au droit du trou (7), le bord (4) du boîtier (3) présentant un bandeau de façade (12), ladite façade supérieure (11) et ledit bandeau de façade (12) sont compris dans un même plan (C) et dans laquelle une garniture de nivellement (13) est interposée d'une part entre le bord (4) du boîtier (3) et le moyen de détection tactile (2) et d'autre part entre le moyen de renfort et le moyen de détection tactile dans laquelle ladite deuxième partie (6b) présente une face supérieure (8) orientée vers un utilisateur et une face inférieure (9) opposée à la face supérieure (8), ledit moyen de détection tactile (2) étant solidarisé sur ladite face supérieure (8) de la deuxième partie (6b) du moyen de renfort (6), le matériau constituant le moyen de détection tactile (2) et le matériau constituant le moyen de renfort (6) présente un coefficient de dilation identique à +/- 33%.

2. Interface selon la revendication 1, dans laquelle la première partie (6a) et la deuxième partie (6b) s'étendent respectivement dans un premier plan (A) et un deuxième plan (B), lesdits plans présentent un angle compris entre 75° et 105°, avantageusement 90°.

3. Interface selon l'une quelconque des revendications précédentes, dans laquelle le boîtier (3) comprend une multiplicité de moyens de renfort (6) distincts.

4. Interface selon l'une quelconque des revendications 1 à 2, dans laquelle le boîtier (3) comprend un unique moyen de renfort (6).

## Patentansprüche

1. Mensch-Maschine-Schnittstelle (1), die eine taktile Abtasteinrichtung (2) enthält, die eine zu einem Benutzer weisende obere Frontseite (11) und ein Gehäuse (3) enthält, wobei das Gehäuse einen eine Öffnung (5) begrenzenden Rand (4) enthält, wobei die taktile Abtasteinrichtung (2) in einem Aufnahmebereich (10) des Gehäuses (3) mindestens gegenüber der Öffnung (5) untergebracht ist, **dadurch gekennzeichnet, dass** das Gehäuse mindestens eine Verstärkungseinrichtung (6) enthält, die von einer Metallplatte gebildet wird, die einen ersten Teil (6a), der in den Rand (4) des Gehäuses (3) versenkt ist, und einen zweiten Teil (6b) enthält, der vom Rand (4) im Bereich der Öffnung (5) mündet, wobei der zweite Teil der Platte zur Unterseite (16) der taktilen Abtasteinrichtung parallel ist, wobei die Verstärkungseinrichtung ein Loch (7) enthält, das vom zweiten Teil (6b) begrenzt wird, wobei die taktile Abtasteinrichtung (2) gegenüber dem Loch (7) fest mit dem zweiten Teil (6b) verbunden ist, wobei der Rand (4) des Gehäuses (3) eine Frontblende (12) aufweist, wobei die obere Frontseite (11) und die Frontblende (12) in der gleichen Ebene (C) enthalten sind und wobei ein Nivelliereinsatz (13) zwischen einerseits den Rand (4) des Gehäuses (3) und die taktile Abtasteinrichtung (2) und andererseits zwischen die Verstärkungseinrichtung und die taktile Abtasteinrichtung eingefügt ist, wobei der zweite Teil (6b) eine zu einem Benutzer gerichtete Oberseite (8) und eine der Oberseite (8) gegenüberliegende Unterseite (9) aufweist, wobei die taktile Abtasteinrichtung (2) fest mit der Oberseite (8) des zweiten Teils (6b) der Verstärkungseinrichtung (6) verbunden ist, wobei das die taktile Abtasteinrichtung (2) bildende Material und das die Verstärkungseinrichtung (6) bildende Material einen gleichen Ausdehnungskoeffizienten bei +/- 33% aufweist.

2. Schnittstelle nach Anspruch 1, wobei der erste Teil (6a) und der zweite Teil (6b) sich in einer ersten Ebene (A) bzw. einer zweiten Ebene (B) erstrecken, wobei die Ebenen einen Winkel zwischen 75° und 105°, vorteilhafterweise 90°, aufweisen.

3. Schnittstelle nach einem der vorhergehenden Ansprüche, wobei das Gehäuse (3) eine Vielzahl von unterschiedlichen Verstärkungseinrichtungen (6) enthält.

4. Schnittstelle nach einem der Ansprüche 1 bis 2, wobei das Gehäuse (3) eine einzige Verstärkungseinrichtung (6) enthält.

## Claims

1. Human-machine interface (1) comprising a touch-sensitive means (2) comprising an upper façade (11) facing a user and a casing (3), said casing comprising an edge (4) delimiting an opening (5), said touch-sensitive means (2) being accommodated in a receiving zone (10) of the casing (3) at least in line with said opening (5), **characterized in that** the casing comprises at least one reinforcing means (6) formed by a metal plate comprising a first part (6a) embedded in said edge (4) of the casing (3) and a second part (6b) protruding from the edge (4) at said opening (5), the second part of the plate being parallel to the lower face (16) of the touch-sensitive means, the reinforcing means comprising a hole (7) delimited by said second part (6b), said touch-sensitive means (2) being secured to said second part (6b) in line with the hole (7), the edge (4) of the casing (3) having a façade strip (12), said upper façade (11) and said façade strip (12) being contained in one and the same plane (C), and wherein a levelling filling (13) is interposed, for the one part, between the edge (4) of the casing (3) and the touch-sensitive means (2) and, for the other part, between the reinforcing means and the touch-sensitive means, wherein said second part (6b) has an upper face (8) facing a user and a lower face (9) on the opposite side from the upper face (8), said touch-sensitive means (2) being secured to said upper face (8) of the second part (6b) of the reinforcing means (6), the material of which the touch-sensitive means (2) is made and the material of which the reinforcing means (6) is made having a coefficient of expansion identical to +/- 33%.

2. Interface according to Claim 1, wherein the first part (6a) and the second part (6b) extend in a first plane (A) and a second plane (B), respectively, said planes exhibiting an angle of between 75° and 105°, advantageously 90°.

3. Interface according to either one of the preceding claims, wherein the casing (3) comprises a multiplicity of separate reinforcing means (6).

4. Interface according to either one of Claims 1 and 2, wherein the casing (3) comprises a single reinforcing means (6).
